# EUROPEAN PATENT APPLICATION

(11) **EP 0 584 703 A1**
(43) Date of publication of application: **02.03.1994**
(21) Application number: 93113192.4
(22) Date of filing: 18.08.1993
(51) Int. Cl.: C09D 127/12, C09D 7/12, C09D 5/08

(54) **Protective coatings of perfluorinated polymer solutions**

(30) Priority: 28.08.1992 US 935351
(71) Applicant: E.I. DU PONT DE NEMOURS AND COMPANY, Wilmington Delaware 19898 (US)
(72) Inventor: Perusich, Stephen Albert, Newark, Delaware 19711 (DE); Tuminello, William Howard, Newark, Delaware 19711 (DE)
(74) Representative: Abitz, Walter, Dr.-Ing.

(57) **Abstract**

A metal is coated with a solution of perfluorocarbon polymer ion-exchange polymer having carboxyl groups. The solvents for making the solution are perfluorocycloalkanes, perfluorinated aromatic compounds and perfluorotrialkyl amines. The solvents have a critical temperature greater than 150° C. The polymer coating acts as a barrier to anions which attack and breakdown the passivity of such metals, thereby protecting the metals against localized corrosion, such as crevice or pitting corrosion.

## Description

### FIELD OF THE INVENTION

This invention relates to protective coatings, and more particularly, to metals coated with solutions of perfluorinated ion exchange polymer having carboxyl groups.

### BACKGROUND OF THE INVENTION

U.S. Patent No. 4,685,940 provides a protective coating on a metal substrate, the protective coating comprising a coating of a perfluorocarbon copolymer over the metal substrate wherein the coating has been annealed so as to affect a morphological change such that the rejection of hostile or interfering anions by the copolymer is improved. Such hostile or interfering anions may promote crevice or pitting corrosion of the metal utilized in the substrate by breaking down the passivity thereof.

The perfluorocarbon copolymer taught in U.S. Patent No. 4,685,940 is preferably an acid or salt derivative of a base copolymer comprising at least two monomers wherein one monomer is selected from a group consisting of a vinyl fluoride, hexafluoropropylene, chlorotrigluoroethylene, perfluoro-(alkyl vinyl ether) and tetrafluoroethylene, and the second monomer is selected from the group of monomers containing an -SO₂F or COF group. The base copolymer is then converted an acid derivative thereof or a salt of this acid derivative. For example, the base copolymer may be converted to the acid or salt derivative thereof by hydrolyzing the base copolymer.

Metals which are susceptible to crevice or pitting as a result of anionic attack include, but are not limited to, metals such as aluminum, nickel, iron, chromium, and alloys containing one or more of these metals. Stainless steels are an example of such alloys.

The preferable method of applying the protective coating taught in U.S. Patent No. 4,685,940 comprises:
(a) applying a solution containing at least one perfluorocarbon copolymer on a metal substrate to form a wet copolymer coating thereon;
(b) drying the wet copolymer coating so as not to disturb the molecular configuration of the copolymer, preferably heat drying;
(c) heat treating the dried copolymer coating at a temperature and for a time duration effective for changing the molecular configuration of the copolymer to a molecular configuration which enhances the rejection of hostile or interfering anions by the copolymer; and
(d) cooling the heat treated copolymer coating and the substrate to room temperature so as to avoid contraction and cracking or rapid crystallization of the heat treated copolymer coating.

A major fundamental problem with this process, however, is that it is difficult to fully dissolve the perfluorocarbon polymers. It is known that some perfluorocarbon copolymers will dissolve in alcohols at elevated temperature and pressure. Some of those solutions are not stable at room temperature. Other solutions are actually dispersions of the polymer which, when applied to the metal surface, may be ineffective or non-uniform. The present invention provides a full solution of perfluorinated polymers having carboxyl groups at room temperature. These solutions may readily be coated on a metal surface to provide a protective coating.

Solutions of the polymers are also useful for preparing ion exchange membranes, including membranes for use in an electrolytic cell such as a chloralkali cell or a fuel cell.

The prior art generally discloses the solubility of certain fluorinated polymers but there is no mention of full solutions of carboxylic fluorinated polymers having high equivalent weights in this class of inventive solvents, particularly at low temperatures.

Some solvents are known in the prior art for this class of carboxylic fluorinated polymers; however, some of the solvents are very expensive or require high temperature to dissolve the polymer. The prior art teaches solvents for carboxylic fluorinated polymers with equivalent weights below about 900 and solvents for such polymers which require elevated temperatures or pressures. There is no teaching of a solvent for the ester form of carboxylic fluorinated polymers with an equivalent weight greater than 900 at low temperatures. Also, there is no teaching of a blend of carboxyl fluorinated polymer and sulfonyl fluorinated polymer to both block the passage of anions and to promote the passage of cations.

For example, U.S. Patent 4,650,551; 4,778,723 and 4,784,900 disclose solutions near room temperature of highly swollen dispersions of resins which are copolymers of TFE and perfluorovinylether comonomers with acidic end groups having low equivalent weights less than 850. Heavily fluorinated alkanes, like 1,2-dibromotetrafluoroethane and 1,1,2-trichlorotrifluoroethane were used as "solvents". Examples of room temperature solutions were also given using polyhalogenated alkyl ethers with boiling points less than 190°C; the equivalent weight for these resins was exceedingly low at 690 or lower.

Fluorinated polymer resins commercially known as NAFION® (available from E. I. du Pont de Nemours and Company) with an equivalent weight greater than about 1000, must be dissolved at elevated temperatures and pressures due to the presence of crystallinity. U.S. Patent Nos. 4,266,036; 4,272,560 and 4,298,697 discuss the use of high boiling perhalogenated alkyl ethers and perhalogenated alkanes as solvents at elevated temperatures. The examples describe the dissolution of 1050 to 1200 equivalent weight resins in oligomers of chlorotrifluoroethylene ("CTFE") at temperatures of about 225° to 250° C; however, the polymers are more likely to decaroxylate at high temperatures. Chemical degradation of the polymer may occur in solutions of CTFE oligomer at 200° C.

U.S. Patent No. 4,535,112 describes dispersions or partial solutions of 1050 to 1200 equivalent weight polymers in a wide variety of heavily fluorinated liquids for purposes of repairing cation exchange membranes. These liquids include perluorodecanoic acid, perfluorotributylamine, pentafluorophenol, pentafluorobenzoic acid, perfluoro-1-methyldecalin and decafluorobiphenyl. There is no mention of full solutions of carboxylic fluorinated polymers having high equivalent weights at low temperatures.

An article entitled "Solubility Characteristics of Perfluorinated Polymers with Sulfonyl Fluoride Functionality" by McCain and Covitch discusses the solubility of so-called sulfonyl fluorinated polymers, but does not mention alkyl carboxylic forms of fluorinated polymers.

### SUMMARY OF THE INVENTION

This invention concerns protective coatings for metals comprising a solution of alkyl carboxylate forms of fluorinated polymers and a solvent which is a perfluorinated cycloalkane, perfluorinated aromatic or perfluorotrialkylamine. Solutions are obtained at about 150° C at autogenous pressure and may readily be applied to the surface of a metal substrate to form a protective coating.

### DETAILED DESCRIPTION OF THE INVENTION

The protective coatings of the present invention are particularly useful in protecting substrates containing passive metals which are susceptible to crevice or pitting via anionic attack. The anions attack the substrates breaking down the passive films of such metals. Examples of such metals though not intended to be an exhaustive list thereof, are aluminum, iron, nickel, chromium, and metal alloys. Aluminum, aluminum alloys and chromium containing alloys are of particular interest. Example of the latter are stainless steels, nickel-based alloys and cobalt-based alloys.

Examples of anions typically encountered in hostile, corrosive environments wherein the protective coating would be useful include, but are not limited to, chloride, bromide, fluoride, perchlorate, thicyanate, iodide, sulfate and nitrate ions.

When a metal, such as iron, nickel, cobalt, chromium, aluminum, titanium, or zirconium, or an alloy, such as the family of steels and alloys of the aforementioned pure metals, is placed in a solution, an oxide film forms on the metal surface and grows logarithmically with time to normally 10 to 1000 Angstroms. Initially, when the metal surface is active (not covered with an oxide), anodic reactions occur at the metal surface to "corrode" the surface (expel positive metal ions away from the surface). A corrosion current can be measured and is directly related to the dissolution of the metal. The metal ions then react with the solution by one or many reactions and begin to form an oxide layer on the surface. As the oxide film grows in thickness, the current (now mainly due to ionic transport through the oxide) decreases dramatically. The decrease in corrosion current is attributed to the formation of the oxide film which acts to hinder diffusion and migration of ions through the film.

Corrosion is thus defined as the electrochemical deterioration of materials (normally metals). Acids, bases, moist air, or any solution may act as an electrolyte when contacted with a metal. Electrochemical reactions then occur at the metal surface, and chemical reactions may occur in the solution. If these reactions continued indefinitely, the metal would be completely destroyed by corrosion.

Corrosion of a metal may occur in eight different ways: (1) uniform or general attack, (2) galvanic or two-metal corrosion, (3) crevice corrosion, (4) pitting corrosion, (5) intergranular corrosion, (6) selective leaching or parting, (7) stress cracking corrosion, and (8) erosion corrosion. The formation of passive films is well known in the art.

When aggressive anions (Cl⁻, Br⁻, I⁻, SO₄⁻², SCN⁻, NO₃⁻, ClO₃⁻, and CH₃CO₂⁻) are present or added to a solution, the anions either diffuse or migrate through the passive oxide film (either through cracks in the film or directly through the film) and concentrate on the metal substrate surface. When the anion concentration is high enough, the time is long enough, the potential (voltage) is low enough, and the pH and temperature are sufficient, the anions will attack the metal forming either a hemispherical pit or a deep crevice. Whether a pit or a crevice will form depends on the local current distribution and other factors.

The protective coating of the present invention is permselective in that it is a barrier to anions. However, water and hydrogen ions and other cations are freely allowed to pass through the coating.

The perfluorcarbon polymers utilized in the protective coating are cation exchange polymers which act as a barrier to the migration and diffusion of anions to the passive substrate.

The polymers may optionally be annealed to the substrate in a manner described in U.S. Patent No. 4,685,940. In particular, the annealing procedure involves a heat treating step and a subsequent cooling step. The heat treating step affects a change in the molecular configuration of the polymer to a molecular configuration which enhances the rejection of hostile or interfering anions by the polymer. The cooling step is affected such that the molecular configuration attained in the heat treating step is preserved, particularly avoiding contraction and cracking or rapid crystalization of the annealed coating. The annealed coating improves the permselectivity and adhesion to the substrate.

The chemical inertness of the perfluorcarbon polymers of the present invention allows such polymers to be placed in direct contact with the corrosive hostile environment without being detrimentally affected itself. As such, the polymer is able to maintain its integrity once coated onto the substrate. Furthermore, the permselectivity of these polymers inhibits or eliminates the transport of anions to the substrate, thereby eliminating or minimizing the effects of such environments on the substrate itself. Without the influx of fresh anionic material to the substrate, the harmful effects of the anionic materials cannot be maintained so as to adversely affect the substrate itself. Thus, crevice or pitting corrosion and to a certain extent general corrosion of the metal substrate is inhibited or as least retarded.

It is also believed that pitting starts at cracks in the oxide films. The coating of the perfluorocarbon polymers may "plug up" those cracks, thereby preventing pitting from ever starting.

The polymers useful herein are fluorinated, which means that at least 90%, preferably at least 95%, and most preferably all of the atoms attached to the carbons are F atoms or side-chain ether groups, which may contain functional groups hydrolyzable to salts. The non-fluorine atoms, if used, may be H, Cl or Br. The fluorinated polymers are the so-called carboxyl polymers and are in the methyl ester form.

The carboxyl polymers have a fluorinated hydrocarbon backbone chain to which are attached side chains carrying, before hydrolysis to the salt form, certain functional groups hydrolyzable in an alkaline medium to carboxylate groups, such as nitrile or ester groups. These polymers include, e.g., those containing the -(OCF₂CFY)ₙ-O-CF₂-CF₂-W side chain, where Y is F or CF₃; n is 0, 1 or 2; and W is COOR or -CN, where R is lower alkyl. Among these polymers, those with n = 1 and Y = CF₃ are preferred. The carboxylic polymers may be treated with a material such as trimethylorthoformate or methanol to insure complete conversion to the ester form.

Preferably, the fluorinated polymers are stored under vacuum in a dessicater to prevent hydrolysis by atmospheric moisture. The resins should be removed from the dessicater just prior to use.

Polymerization can be carried out by the methods well known in the art. Especially useful is solution polymerization using 1,2,2-trichlor-2,1,1-trifluoroethane as the solvent and perfluoropropionyl peroxide as the initiator. Polymerization can also be carried out by aqueous granular polymerization. All of these polymers are known to those skilled in the art, and many are items of commerce.

Compounds useful herein as solvents are perfluorinated cycloalkanes, perfluorinated aromatic compounds and perfluorotrialkylamines. Such solvents must have a critical temperature above about 150°C.

Perfluorinated cycloalkanes are saturated cyclic compounds, which may contain fused or unfused rings. The cycloalkane compounds may be substituted by perfluoroalkyl and perfluoroalkylene groups. Perfluoroalkyl groups are a saturated branched or linear carbon chain. Perfluoroalkylene group are an alkylene group which is branched or linear and connects two different carbocyclic rings. The total number of carbon atoms in all of the perfluoroalkyl and perfluoroalkylene groups in a moleculer of the solvent are preferably less than the total number of carbon atoms in the carbocyclic rings of the solvent molecule. It is preferred if there are at least twice as many carbon atoms in the rings of the solvent molecule as there are atoms in the perfluoroalkyl and perfluoroalkylene groups. Perfluorinated aromatic compounds are similar to perfluorocyclic alkanes, provided that one or more of the constituents is a phenyl group. The perfluorinated aromatic compounds may also be sutstituted with perfluoroalkyl groups or perfluoroalkylene groups. Perfluorotrialkyl amines include, for example, perfluorotrihexyl amine.

In order to ensure that the solvent will actually dissolve the polymer, the critical temperature of the solvent should be about 150°C or higher, preferably about 180°C or higher. The critical temperature is that temperature at which the polymer visually dissolves in the solvent.

Compounds useful as solvents herein include, but are not limited to, hexafluorobenzene, perfluoromethylcyclohexane, perfluorodecalin, perfluorotetradecahydrophenanthrene, and perfluorotrihexylamine, preferably perfluorotetradecahydrophenanthrene. It is believed that perfluorotetradecahydrophenanthrene is the best solvent for the carboxylic fluorinated polymers because it had a sufficiently high critical temperature (and boiling point) to readily dissolve the polymers at atmospheric pressure.

The process of dissolving the fluorinated polymer is carried out at the temperature required to dissolve the polymer. One may use atmospheric or autogenous pressure. The minimum temperature required can be determined by simple experimentation and will vary with the polymer and solvent. Generally, lower melting polymers will require lower temperatures, while higher melting polymers will require higher temperatures. The temperature must not be above the critical temperature of the solvent, so the critical temperature of the solvent must be above the temperature of dissolution.

The solvent and fluorinated polymer must be stable at the process temperature. For example, exposure of the hot polymer to active metals such as aluminum may cause polymer decomposition. Stirring or other forms of agitation will increase the rate of dissolution of the polymer. Other factors which influence the rate of dissolution and their effect are: higher interfacial surface area between the polymer and solvent gives faster rates, and higher polymer molecular weight and higher polymer concentrations give slower rates of dissolution. Dissolution will also generally be faster when the initial polymer is more finely divided. The time required for dissolution will vary with the particular polymer and solvent chosen, the temperature, the pressure as well as the other factors discussed above, but generally will be in a the range of a few minutes to a few hours. Dissolution can be followed visually. As discussed above, dissolution of the described polymers in the solvents of the instant invention is faster and more complete than in solvents previously known for these polymers.

The polymer concentration in solution is generally about 1 to 5 percent by weight, but the higher the molecular weight of the polymer, the more difficult it is to make relatively concentrated solutions due to longer dissolution times and higher solution viscosity. Preferred ingredients for the process are the same as given for the solution composition above.

The perfluorocarbon polymer coating solution is applied so as to completely cover the portion of the metal substrate to be exposed to the environment. The copolymer coating is then dried. The coating and drying process may be repeated as required to produce a coating which acts as a barrier against the migration and diffusion of anions to the metal's surface. The coating may be applied by methods, such as spraying, vacuum deposition, painting, dipping or spin-coating. Finally, the copolymer coating is optionally annealed, i.e., heat treated and cooled.

As described in U.S. Patent No. 4,685,940, it is believed that annealing changes the morphology (molecular configuration) of the perfluorocarbon polymer of this coating to one which is more highly ordered. The more highly ordered polymer contains carboxyl functional groups that are more closely spaced than the unchanged or unannealed polymer, thereby providing an enhanced functional group domain structure. As such, the changed polymer possesses better permselectivity than the unchanged polymer. The annealed polymer also possesses enhanced adhesion and lower solubility.

In a preferred embodiment, the substrate is coated by painting the solution of about 2% by weight of a NAFIONO® CR perfluorocarbon polymer of about 1100 equivalent weight in perfluorotetradecahydrophenanthrene. The copolymer coating is then dried by any appropriate means to remove the perfluorotetradecahydrophenanthrene solvent, such as by heating, air drying at room temperature, or drying in a dessicator. If heating to dry, the temperature is preferably not raised above about 160° C so as not to disturb the molecular configuration of the polymer.

The preferred means of drying the polymer coating is to heat the coated substrate in the range of about 120° C to about 160° C for about 30 minutes to about 360 minutes. The coating procedure is repeated, if necessary, until the substrate is entirely coated with a thin film of the perfluorocarbon polymer. A preferred number of repetitions of the coating procedure is from one (i.e., the coating procedure is performed one time) to about five times, the most preferred number of repetitions being from about two to four times, depending on the concentration of the solution.

The perfluorocarbon polymer coating may then be annealed by heat treating the coated substrate to an effective temperature and for a time duration for affecting a change in the molecular configuration of the copolymer which enhances the rejection of anions and then cooling, preferably to room temperature, the heat treated copolymer coating.

The coated substrate may then be hydrated by means such as soaking, heating or boiling in a liquid such as water, water solutions or buffer solutions or exposure to vapors thereof (e.g., steaming). Other water sources include water-saturated air and steam. Preferably, however, the perfluorocarbon polymer is in the salt form.

The mechanism of the corrosion-resistant coating is not known, however, it is believed that the fluoropolymer coating protects the metal in a number of ways. Particularly, the metal under attack acts as an anode because the main corrosion reactions are oxidations (Fe → Fe⁺² + 2e⁻). Another metal could be present in the system to act as the cathode or a portion of the corroding metal could act as the cathode. In either case, the potential field (migration) and the concentration gradient (diffusion) will drive the aggressive anions toward the corroding or passive metal surface. A coating of the fluoropolymer solution of the present invention on top of the oxide film will do three things: (1) create a thicker more torturous route thus limiting anion diffusion, (2) create an electrical negatively-charged barrier to inhibit anion migration, and (3) allow the positively-charged corrosion products to escape through the layer by both migration and diffusion. Even if the oxide film grows with time, the fluoropolymer coating should be able to "stretch" accordingly to prevent delamination.

## Claims

1. An article resistant to localized corrosion resulting from anionic attack thereof, said article comprising:
(a) a passive metal substrate, said substrate comprising a metal or metal alloys, and
(b) a coating over said metal substrate, said coating comprising a solution of a carboxylic fluorinated polymer having an equivalent weight of more than about 900 and containing tetrafluoroethylene units or a blend of such carboxylic fluorinated polymer with a sulfonic fluorinated polymer dissolved in a solvent which is selected from the group consisting of (i) a perfluorinated cycloalkane, (ii) perfluorinated aromatic compounds, or (iii) perfluorotrialkylamines; said solvent having a critical temperature of greater than about 150° C.

2. The article according to claim 1 wherein said passive metal is selected from the group consisting of aluminum, chromium, iron, nickel and metal alloys containing at least one of said aluminum, chromium, iron and nickel.

3. The article according to claim 1 wherein said hostile or interfering anions are chloride, bromide, fluoride, iodide, perchlorate, thiocyanate, nitrate and sulfate ions.

4. The article according to claim 1 wherein the solvent is perfluorinated cylcoalkane substituted with one or more perfluoroalkyl or perfluoroalkylene groups.

5. The article according to claim 1 wherein said polymer is the side chain OCF₂CF(CF₃)OCF₂CF₂COOCH₃.

6. The article according to claim 1 wherein said solvent is perfluorotetradecahydrophenanthrene, perfluoromethylecyclohexane, perfluoro decalin, hexafluorobenzene or perfluorotrihexylamine.

7. A process for applying a protective coating to a metal substrate selected from the group consisting of passive metals and alloys containing at least one of said passive metals comprising applying a solution to said metal substrate in which said solution comprises a carboxylic fluorinated polymer having an equivalent weight of more than about 900 and containing tetrafluoroethylene units or a blend of such carboxylic fluorinated polymer with a sulfonic fluorinated polymer dissolved in a solvent which is selected from the group consisting of (i) a perfluorinated cycloalkane, (ii) perfluorinated aromatic compounds, or (iii) perfluoritrialkylamines; said solvent having a critical temperature of greater than about 150° C.
